# EUROPEAN PATENT APPLICATION

(11) **EP 4 696 916 A1**
(43) Date of publication of application: **18.02.2026**
(21) Application number: 25191187.1
(22) Date of filing: 23.07.2025
(51) Int. Cl.: F16L 5/04, F16L 59/12, F16L 59/14, F16L 59/02, F16L 59/04

(54) **SYSTEM FOR PASSIVE FIRE PROTECTION FOR AIR INTAKE DUCTS OR FLUE EXTRACTION DUCTS**

(30) Priority: 01.08.2024 IT 202400018025
(71) Applicant: AF Systems Societá per Azioni, 29121 Piacenza (PC) (IT)
(72) Inventor: ANDRIOLO, Paolo Giovanni, 29121 PIACENZA (PC) (IT)
(74) Representative: Vatti, Francesco Paolo

(57) **Abstract**

System for passive fire protection for an air intake/flue extraction duct, characterized in that it provides spacing elements between a covering layer of at least non-combustible material of said duct and a perforated surface covering said duct.

## Description

The present invention relates to a system for passive fire protection air intake ducts or flue extraction ducts, in particular a system apt to oppose, the propagation of smoke and heat into compartments adjacent to the one in which the fire originated, if a fire starts.

Fire compartmentalization is one of the fundamental strategies of passive fire protection in the civil sector: buildings are divided into several independent areas, called "compartments," so that, in the event of a fire in one compartment, the evacuation of people into adjacent compartments ensures their safety for a certain period of time. For this procedure to be successful, it is necessary that the walls and floors dividing the compartments maintain, at least for the desired period, the required integrity and thermal insulation properties. Therefore, materials, densities, and thicknesses of floors and walls are carefully selected, and systems are used to restore such properties in the event that service penetrations are present.

In buildings, especially new constructions, one of the largest service penetrations is represented by the air ducts typical of ventilation systems and flue extraction systems that pass through multiple compartments of the building.

In the event of a fire, there is a high risk that the duct will promote the propagation of flames and smoke, as it effectively constitutes a preferential and direct channel, both vertically and horizontally, connecting different environments. This condition can rapidly lead to devastating situations. To reduce such a risk, shutter systems, known as "fire dampers," have been installed along the duct, which serve to isolate the area affected by the fire by effectively decoupling the duct sections present in different compartments and thus limiting the damage.

However, these systems are not always usable, either because in some cases an air passage is required during a fire (for example, the air intake ducts of pressurization systems for escape routes or the smoke extraction ducts that respectively supply or extract air), or because in many fire safety retrofit projects, the installation of fire dampers would entail logistical and/or cost issues that are difficult to overcome.

Other systems have been used to address the above-mentioned problems, such as rigid calcium silicate or plasterboard panels, or panels and/or mats made of mineral wool that externally cover the air intake/flue extraction duct, leaving the internal air passage unobstructed and allowing the system to remain operational.

However, even these other systems, which rely solely on the physical properties of insulation and conductivity, have proven problematic due to their weight and, in some cases, their bulk, which add to the already considerable weight and/or bulk of the duct itself. In particular, the increased thickness typically requires the involvement of multiple operators during installation and the implementation of dedicated suspension systems for the plant that are more robust than those originally foreseen for a standard duct.

Therefore, there is the need, and it is the object of the present invention, to provide a system for passive fire protection an air intake/flue extraction duct, whether in a horizontal, vertical, or mixed position, that overcomes the above-mentioned problems and is capable of ensuring both insulation and hot smoke tightness at critical points (such as, for example, where a duct passes through a fire-rated wall), thereby making the compartment adjacent to the one affected by the fire safe.

Said object is achieved by means of a system for passive fire protection an air intake/flue extraction duct, characterized in that it provides spacing elements between a covering layer of at least non-combustible material of said duct and a perforated surface covering said duct.

Other preferred features will be defined in the dependent claims and will be clearly understood from the description of a preferred embodiment, which is provided below with reference to the attached figures, in which:

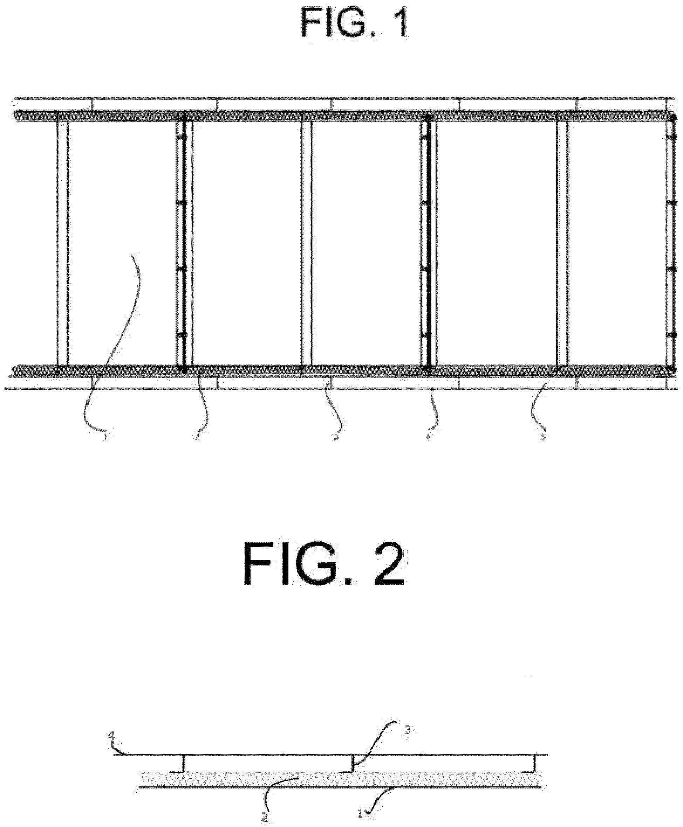

FIG. 1 is a view of a duct according to the invention, ready for installation, mounted on a rectangular-profile duct;
FIG. 2 is a view of a detail of the system of FIG. 1;

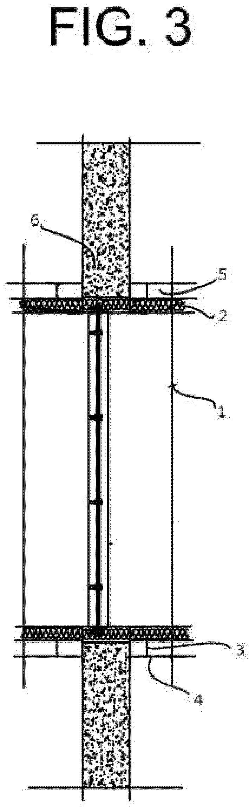

FIG. 3 is a view of the system according to the invention, installed with a partially removed partition wall.

A system for passive fire protection an air intake/flue extraction duct according to the invention is composed of a series of conventional duct modules 1 made of metallic material and connected to each other, on the external surface of which are mounted in succession a covering layer of non-combustible material 2, spacing elements 3, and an external perforated surface 4.

In a preferred embodiment, said spacing elements 3 are spacer profiles or spacers, arranged at regular intervals, and the perforated surface 4 is formed by a wire mesh that wraps the entire system, adhering to said spacers.

An air gap 5 is thus formed between the covering layer 2 and the wire mesh 4, thanks to the presence of the spacing elements, which allows thermal exchange and consequently the maintenance of the correct temperature in the environment external to the duct, thereby achieving the intended purpose.

Furthermore, the covering layer of non-combustible material 2 is composed of a stone wool mat quilted externally on a metal mesh and an aluminium sheet, and internally on a glass fiber fabric.

It is also preferred that the spacers 3 and the metal mesh 4 are made of galvanized steel, but each may be made of different materials, provided that they maintain physical properties consistent with the intended purpose for which they have been included.

In alternative embodiments, the distance between the covering layer 2 and the external perforated surface 4 is maintained by spacing elements 3 formed by a specific geometry of the external perforated surface 4, which features introflexions designed to come into contact with said covering layer 2. Alternatively, it is possible for the covering layer 2 to have rigid extrusions sufficient to maintain stable spacing, thereby themselves serving as the spacing elements.

The installation of the duct according to the first embodiment of the invention is relatively simple, following a sequence of operations that ensure correct positioning and functioning.

The operator first wraps the covering layer 2 homogeneously and continuously over the entire surface of the duct; subsequently, independent spacing elements, where provided, are applied transversely on the covering layer. Understandably, it is appropriate to arrange the number of spacers necessary and sufficient to maintain a continuous and constant distance between the covering layer and the external perforated surface.

For example, the spacing elements may be sheet metal spacers, but any shape and material may be used without particular requirements, provided that the distance between the covering layer and the external perforated surface is maintained and the fire resistance requirements are met.

In the case where introflexions or extrusions are provided, it is no longer necessary to subsequently apply the spacing elements, as they are in fact integral with one of the other two constituent elements, namely either the covering layer or the external perforated surface.

In the case of a duct that follows a linear path without encountering obstacles, the assembly is thus carried out.

In the case of a passage through walls, or changes in direction, for example vertical/horizontal, additional measures are required. In particular, the operator may interrupt the entire protection system of the duct for the entire crossing, inserting an L-shaped profile of suitable material and section so that the entire duct is framed, keeping the side in contact with the wall or floor, and filling the spaces between the duct and the internal surface of the opening with insulating material 5.

Preferably, the insulating material used to fill the void left between the wall and the duct is obtained from the offcuts of the non-combustible covering layer, completely filling the cavity.

As can be understood, a system has thus been created that is capable of providing substantially complete passive fire protection for metallic air intake/flue extraction ducts, thereby achieving the intended purpose of increasing protection and prevention against the propagation of fires, in particular fires that could develop along the air column provided within a ventilation shaft.

The description of the preferred embodiment set forth above is intended to be exemplary and in no way limiting.

Likewise, only those elements considered mandatary for the structure to function have been described. The addition or removal of constituent elements, provided that they maintain the same properties and ensure the same result, does not in any way alter the innovative scope of the solution as defined in the appended claims.

A particular embodiment has also been described, the representation of which in the figures shows a rectangular-profile duct. However, the above description does not refer to the profile of the duct: the differences between one profile and another are exclusively structural and related to bulk, but are in no way functional, and therefore all foreseeable solutions are consistent with the set of appended claims.

Indeed, it is possible to provide a circular profile, the substantial difference of which compared to the solution described above-apart from the inevitably different dimensions-lies in the type of joint with respect to the solution described above. However, this does not alter the fundamental substance of the solution, which is essentially based on the presence of elements apt to eliminate localized overheating in areas of greater fragility of the structure supporting the duct.

Furthermore, the figures expressly refer to modules 1 flanged at the ends for mutual connection: this is solely a design choice that is particularly useful for a clear understanding of the inventive scope of the solution, but it must not be considered in any way limiting or identifying of the innovative solution as described in the claims. Various types of connections between the individual modules may be provided, and theoretically, the solution would still be valid and advantageous even in the case where it is composed of a single module 1.

## Claims

1. System for passive fire protection an air intake/flue extraction duct, **characterized in that** it provides spacing elements (3) between a covering layer (2) of at least non-combustible material of said duct and a perforated surface (4) of said duct covering.

2. System for passive fire protection an air intake/exhaust gas duct according to claim 1, **characterized in that** said duct is composed of a series of at least one conventional duct module (1) made of metallic material, connected to each other, on the external surface of which are mounted in succession: said covering layer (2) of fireproof material, a series of at least one spacer element (3) arranged at regular intervals, and a wire mesh (4) wrapping said duct (1) and said covering layer (2), said wire mesh (4) being adhered to said spacers (3), an air gap (5) being formed between said covering layer (2) and said spacers (3).

3. System for passive fire protection an air supply/extraction duct of metal according to any one of claims 1 or 2, **characterized in that** said fire retardant covering layer (2) comprises a stone wool mat layer quilted externally on a metal mesh and internally on a glass wool fabric.

4. System for passive fire protection an air supply/extraction duct and metal duct according to any one of the preceding claims, **characterized in that** said spacing elements (3) are formed by introflexions departing from said perforated outer surface (4).

5. System for passive fire protection an air supply/extraction and metal duct according to any one of claims 1 to 3, **characterized in that** said spacing elements (3) comprise rigid extrusions departing from said covering layer (2).

6. System for passive fire protection an air supply/exhaust duct and metal mesh according to any one of the preceding claims, **characterized in that** both said spacers (3) and said metal mesh (4) are made of galvanized steel.
